# EUROPÄISCHE PATENTSCHRIFT

(11) **EP 2 691 665 B1**
(45) Veröffentlichungstag und Bekanntmachung des Hinweises auf die Patenterteilung: **16.09.2015**
(21) Anmeldenummer: 12713011.0
(22) Anmeldetag: 26.03.2012
(51) Int. Cl.: F16C 33/46, B23C 3/02, F16C 19/36

(54) **WÄLZLAGERKÄFIG UND VERFAHREN ZUR HERSTELLUNG EINES WÄLZLAGERKÄFIGS**
ROLLING-ELEMENT BEARING CAGE AND METHOD FOR PRODUCING A ROLLING-ELEMENT BEARING CAGE
CAGE DE PALIER À ROULEMENT ET PROCÉDÉ DE FABRICATION D'UNE CAGE DE PALIER À ROULEMENT

(30) Priorität: 31.03.2011 DE 102011006467
(43) Veröffentlichungstag der Anmeldung: 05.02.2014
(73) Patentinhaber: Schaeffler Technologies AG & Co. KG, 91074 Herzogenaurach (DE)
(72) Erfinder: SCHULZ, Alexander, 97422 Schweinfurt (DE)
(86) Internationale Anmeldenummer: PCT/EP2012/055299
(87) Internationale Veröffentlichungsnummer: WO 2012/130791

(56) Entgegenhaltungen:
- DE-A1-102007 057 550
- DE-B3-102006 006 146
- JP-A- 2000 087 972
- JP-A- 2002 235 752

## Beschreibung

### Gebiet der Erfindung

Die Erfindung betrifft einen Wälzlagerkäfig mit zwei Seitenringen und einer Mehrzahl von Käfigstegen, wobei die Seitenringe und die Käfigstege eine Vielzahl von Käfigtaschen bilden. Ferner betrifft die Erfindung ein Verfahren zur Herstellung eines solchen Wälzlagerkäfigs.

### Hintergrund der Erfindung

Gattungsgemäße Wälzlagerkäfige, beispielsweise für Kegelrollenlager, werden aus einem ringförmigen Käfigrohling gefertigt, in den die Konturen für die Käfigtaschen eingefräst werden. Die Kontur der Käfigtaschen ist weitgehend durch die Art und Größe der verwendeten Wälzkörper bestimmt. Bei kegelförmigen oder zylindrischen Wälzkörpern weisen die Käfigtaschen eine im Wesentlichen viereckige Kontur auf. In die Ecken der Käfigtaschen werden üblicherweise Vertiefungen eingefräst, die ein Anlaufen der Wälzkörper an die Ecken der Käfigtaschen verhindern. In der DE 100 21 089 B4 ist beispielsweise ein Käfig für ein Wälzlager beschrieben, bei dem eine Fluchtvertiefung in jeder Ecke der Käfigtaschen vorgesehen ist.

Es ist bekannt, dass die Käfigtaschen der gefrästen Massiv-Käfige mit Schwalbenschwanzfräsen erzeugt werden. Bei einer solchen Bearbeitung benötigt man jedoch als Auslauf der Käfigtasche eine Hinterfräsung. Nachteilig bei einer solchen Hinterfräsung ist, dass durch diese der Käfigsteg am Übergang zum Seitenrand bzw. zum Seitenring mechanisch geschwächt wird.

Außerdem ist aus der DE 10 2006 006 146 B3 ein Verfahren zum Fräsen eines Massivkäfigs für ein Wälzlager bekannt, bei dem mit einem Bohr- oder Fräswerkzeug Hinterstriche für die Wälzkörper in den Ecken der Käfigtaschen erzeugt werden.

DE 10 2007 057 550 A1 offenbart einen Wälzlagerkäfig mit Vertiefungen an den Taschenecken.

Die Vertiefungen bestehen jeweils aus einer zylindrischen und aus einer konischen Fläche.

### 5 Aufgabe der Erfindung

Der Erfindung liegt die Aufgabe zugrunde, einen Wälzlagerkäfig für ein Rollenlager vorzustellen, bei dem die Vertiefungen in den Käfigtaschen die Stabilität der Käfigstege weniger als bisher üblich schwächen.

### Zusammenfassung der Erfindung

Der Erfindung liegt die Erkenntnis zugrunde, dass durch eine Änderung der geometrischen Form der Ecken der Käfigtaschen die Stabilität der Käfigstege und damit des Käfigs erhöht werden kann, ohne deren Funktion, nämlich das Anlaufen der Wälzkörper zu verhindern, zu beeinträchtigen.

Die Erfindung geht daher aus von einem gattungsgemäßen Wälzlagerkäfig mit zwei Seitenringen und einer Mehrzahl von Käfigstegen, wobei die Seitenringe und die Käfigstege eine Vielzahl von Käfigtaschen bilden. Um diesen Wälzlagerkäfig im Bereich der Taschenecken so wenig wie möglich mechanisch zu schwächen ist gemäß der Erfindung außerdem vorgesehen, dass in den Ecken der Käfigtaschen jeweils eine Vertiefung ausgebildet ist, die sich zu ihrer radialen Mitte hin verjüngt bzw. verkleinert, ohne dabei eine Anlauffläche für den zugeordneten Wälzkörper zu bilden.

Durch diese Ausbildung der Taschenecken wird nicht mehr wie bisher unnötig viel Material im Anbindungsbereich der Käfigstege an den Seitenringen des Käfigs entfernt, so dass dieser für die mechanischen Eigenschaften des Käfigs besonders kritische Bereich einerseits vergleichsweise stabiler als bisher ausgebildet ist, und dennoch eine so große Vertiefung aufweist, die sicher ein Anlaufen der axial endseitigen Ecken der Wälzkörper verhindert.
Die Käfigstege des erfindungsgemäßen Wälzlagerkäfigs sind im Bereich ihres Übergangs zum jeweiligen Seitenring, also dort wo die Käfigtaschen gerundete Ecken aufweist, so ausgebildet, dass einerseits ein Anlaufen der Enden der Wälzkörper sicher vermieden wird, und dass anderseits die Käfigstruktur durch die Ausbildung der gerundeten Ecken so wenig wie möglich mechanisch geschwächt ist. Dadurch ergibt sich die Möglichkeit, bei gleicher mechanischer Stabilität der Stege des Wälzlagerkäfigs diese schmaler auszubilden, wodurch eine größere Anzahl von Wälzkörpertaschen im Käfig angeordnet werden kann. Demzufolge können mehr Wälzkörper in dem Wälzlager aufgenommen werden als bei einer konventionellen Konstruktion des Käfigs, wodurch letztlich die Tragfähigkeit des Wälzlagers bei gleichem Durchmesser erhöht ist.

Bevorzugt ist vorgesehen, dass die Verjüngung der Vertiefung der Taschenecken sowohl in Umfangsrichtung als auch in axialer Richtung des Käfigs ausgebildet ist. Hierdurch wird bei der Herstellung des Käfigs besonders wenig Käfigwerkstoff im Bereich der Taschenecken entfernt.

Gemäß einer anderen Weiterbildung ist vorgesehen, dass die Taschenecken in einer Draufsicht von radial außen nach radial innen gesehen annähernd elliptisch oder in teilweiser Form eines Stadions ausgebildet sind. Dabei ist der Bereich, an dem der jeweilige Käfigsteg an dem Seitenring des Käfigs angebunden ist, etwa halbkreisförmig ausgebildet, so dass die axial endseitige Kante eines rollenförmigen Wälzkörpers ein ausreichender Freiraum gewährt wird.

Vorzugsweise ist ein erfindungsgemäß ausgebildeter Käfig mit seinen Seitenringen und Käfigstegen als Massivkäfig ausgebildet und aus einem Stück gefertigt. Es ist aber auch möglich, einen solchen Wälzlagerkäfig aus einzelnen Bauteilen zusammenzufügen.

Gemäß einem weiteren Merkmal der Erfindung ist vorgesehen, dass die radial nach außen weisende Seite der Käfigstege in Umfangsrichtung des Käfigs gesehen breiter ausgebildet ist als deren radial nach innen weisende Seite. Hierdurch wird berücksichtigt, dass rollenförmige Wälzkörper nur mit einem Teil ihres Durchmessers in den Käfigtaschen aufgenommen sind.

Einer Weiterbildung des gerade genannten Konstruktionsmerkmals bestimmt, dass die in Umfangsrichtung weisenden Seiten der Käfigstege jeweils zwei Abschnitte aufweisen, die zueinander abgewinkelt ausgebildet sind. Auch durch diese Bauweise sind die Käfigstege möglichst stabil ausgelegt, wobei lediglich der radial innere Abschnitt dieser Seitenflächen an die Geometrie der verwendeten Wälzkörper angepasst ist.

In diesem Zusammenhang wird es als vorteilhaft erachtet, wenn die gerade genannten, zueinander abgewinkelten Abschnitte der in Umfangsrichtung weisenden Seiten der Käfigstege unter einem Winkel a von 120° bis 170° aneinander grenzen. Als besonders geeignet erscheint ein Winkel a von 150°.

Außerdem ist es vorteilhaft, wenn vorgesehen ist, dass die radial nach innen weisende Seite eines jeden Käfigstegs mit dem daran nach radial außen anschließenden Abschnitt der in Umfangsrichtung weisenden Seiten der Käfigstege unter einem Winkel b von 100° bis 150° aneinander grenzen. Als besonders geeignet erscheint ein Winkel a von 125°.

Schließlich ist in diesem Zusammenhang bevorzugt vorgesehen, dass die radial nach außen weisende Seite eines jeden Käfigstegs mit dem daran nach radial innen anschließendem Abschnitt der in Umfangsrichtung weisenden Seiten des Käfigstegs unter einem Winkel c von 80° bis 90° aneinander grenzen. Als besonders geeignet erscheint ein Winkel a von 30°.

Ein weiteres vorteilhaftes geometrisches Merkmal eines erfindungsgemäß ausgebildeten Käfigs ist es, wenn der radial innen angeordnete Abschnitt der in Umfangsrichtung weisenden Seiten eines jeden Käfigstegs unter einem Winkel d von 20° bis 40° zu einer Geraden ausgerichtet ist, die parallel zur Flächennormalen der radial nach innen weisenden Seite des Käfigstegs ausgerichtet ist.

Die Erfindung betrifft auch ein Verfahren zur Herstellung eines Wälzlagerkäfigs mit zumindest einigen der vorgenannten Merkmale. Hierbei ist vorgesehen, dass zur Herstellung eines solchen Käfigs eine Vielzahl von Käfigtaschen in einen massiven Käfigrohling gefräst werden, wobei die Ecken der Käfigtaschen derart gefräst werden, dass in ihnen jeweils eine Vertiefung ausgebildet ist, die sich zu ihrer radialen Mitte hin verjüngt bzw. verringert, ohne dabei eine Anlauffläche für den zugeordneten Wälzkörper zu bilden.

Hierbei kann ist bevorzugt vorgesehen, dass die Vertiefung der Taschenecken so ausgefräst werden, dass die genannte Verjüngung der Vertiefung sowohl in Umfangsrichtung als auch in axialer Richtung des Käfigs ausgebildet ist.

Durch die beschriebene Formung der Vertiefungen in den Ecken der Käfigtaschen bleibt die Stabilität der Käfigstege erhalten, ohne deren Funktion, nämlich ein ungewolltes Anlaufen der Wälzkörperrollen an die Ecken der Käfigtaschen zu verhindern, zu beeinträchtigen.

Das Fräsen erfolgt vorzugsweise mit einer mehrachsigen Fräsmaschine (NC-Mehrachsen-Fräsmaschine), wodurch die Form der Taschenecken optimiert und die Herstellkosten reduziert werden.

### Kurze Beschreibung der Zeichnungen

Im Folgenden wird die Erfindung anhand eines in einer Zeichnung dargestellten Ausführungsbeispiels weiter erläutert. Darin zeigt
- Fig. 1: eine perspektivische Ansicht eines erfindungsgemäßen Käfig eines Kegelrollenlagers,
- Fig. 2: einen Längsschnitt durch den Käfig gemäß Fig. 1 mit einer Draufsicht auf eine Käfigtasche und einen kegelförmigen Wälzkörper,
- Fig. 3: einen Querschnitt A-B durch einen Steg des Käfigs gemäß Fig. 2 mit einer Draufsicht auf einen Seitenring und die dort ausgebildeten erfindungsgemäßen Taschenecken,
- Fig. 4: eine perspektivische Teilansicht auf einen Seitenring des Käfigs gemäß Fig. 2 mit Käfigstegen und Taschenecken gemäß der Erfindung,
- Fig. 5: einen Querschnitt A-B gemäß Fig. 2 durch einen Käfigsteg mit eingezeichneten Anstellwinkeln von dessen Umfangsflächen,
- Fig. 6: einen Querschnitt durch einen Käfigsteg mit benachbart angeordneten Kegelrollen,
- Fig. 7: einen Querschnitt E-F durch eine Kegelrolle mit benachbart angeordneten Käfigstegen,
- Fig. 8: eine Draufsicht auf eine Käfigtasche des Käfigs gemäß Fig. 2,
- Fig. 9: eine dreidimensionale Darstellung eines erfindungsgemäßen Wälzlagerkäfigs in einem halben Längsschnitt, und
- Fig. 10: eine perspektivische Ansicht des Käfigs gemäß Fig. 2 im Bereich der Taschenecken mit einer Blickrichtung von radial innen nach radial außen.

### Detaillierte Beschreibung der Zeichnungen

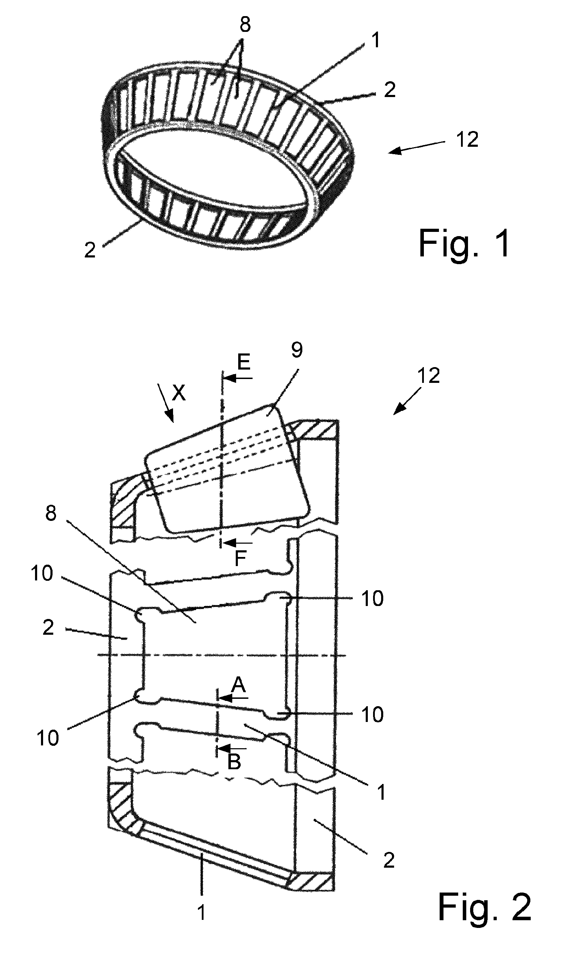

Fig. 1 zeigt demnach einen erfindungsgemäß ausgebildeten Wälzlagerkäfig 12, der aus einem ringförmigen Massivteil ausgefräst wurde. Dazu wurde eine mehrachsige Fräsmaschine genutzt, die die Käfigtaschen 8 ausfräste, so dass zwei Seitenringe 2 durch eine Mehrzahl von Käfigstegen 1 fest miteinander verbunden sind.

Der Wälzlagerkäfig 12 ist in Fig. 2 in einer Längsschnittansicht deutlicher erkennbar. In eine Käfigtasche 8 ist ein kegelförmiger Wälzkörper 9 eingesetzt, der die Käfigtasche 8 in an sich bekannter Weise nur mit einem Teil seines Durchmessers durchdringt. Die in einer Ansicht X vollständig sichtbar gezeigte Käfigtasche 8 weist in demjenigen Bereich, in dem die Käfigstege 1 mit den beiden Seitenringen 2 verbunden sind, erkennbar teilweise elliptisch bzw. teilweise stadionartig ausgebildete Taschenecken 10 auf. Diese Taschenecken 10 sind so geformt und vor allem in radialer Richtung so ausgebildet, dass die in einer Käfigtasche 8 aufgenommenen Wälzkörper mit ihren axial endseitigen bzw. stirnseitigen Kanten nicht gegen den Käfig 12 anlaufen.

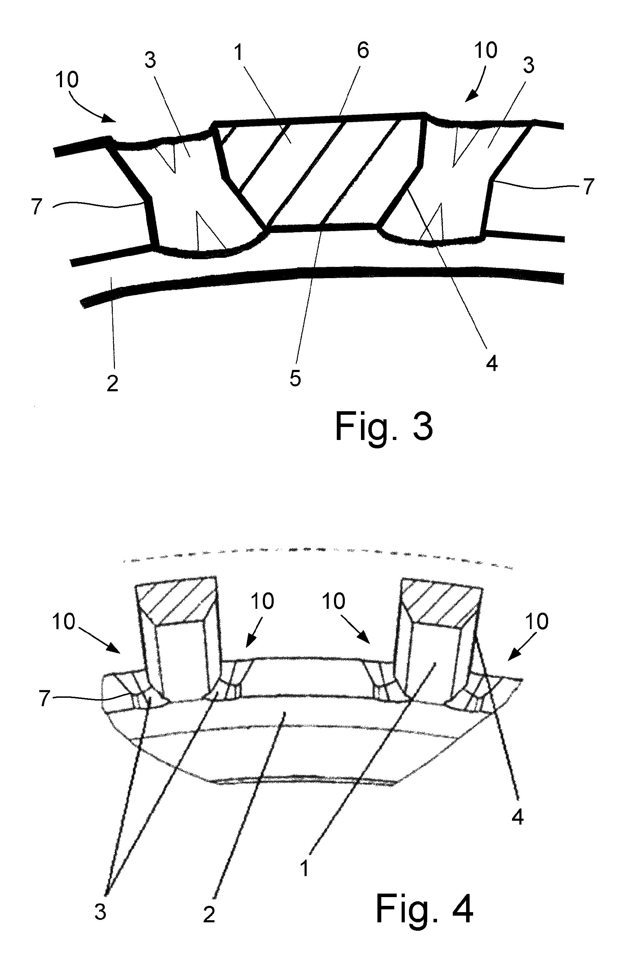

Die besondere Ausbildung der Taschenecken 10 ist besonders gut in den Figuren 3 und 4 erkennbar. In der in Fig. 3 gezeigten axialen Draufsicht von axial innen nach axial außen auf einen Seitenring 2 des Käfigs 12 ist deutlich erkennbar, dass die Taschenecken 10 eine neue und ungewöhnliche Geometrie aufweisen. So ist vorgesehen, dass in den Taschenecken 10 jeweils eine Vertiefung 3 ausgebildet ist, die sich zu ihrer radialen Mitte 7 hin verjüngt, ohne dabei eine Anlauffläche für den zugeordneten Wälzkörper 9 zu bieten. Anders ausgedrückt sind die Taschenecken 10 so ausgebildet, dass der durch die Vertiefungen 3 erzeugte Raum sich von seiner radialen Mitte 7 ausgehend nach radial außen und nach radial innen aufweiten.

Außerdem zeigen die Figuren 3 und 4 deutlich, dass die Verjüngung der Vertiefungen 3 der Taschenecken 10 auch in axialer Richtung des Käfigs 12 ausgebildet ist. Dies bedeutet, dass die Vertiefungen 3 der Taschenecken 10 im Bereich ihrer radialen Mitte 7 weniger tief sind als radial innen und radial außen.

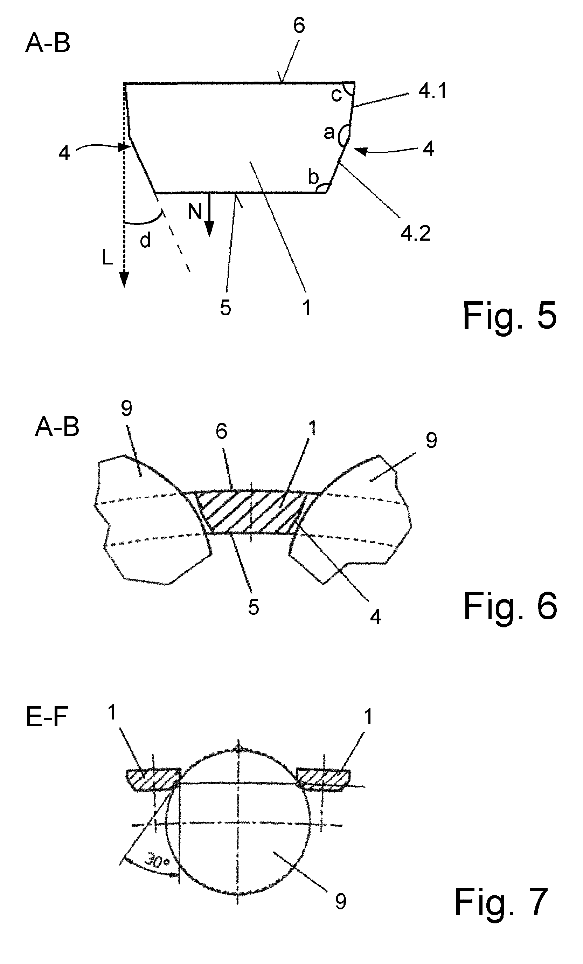

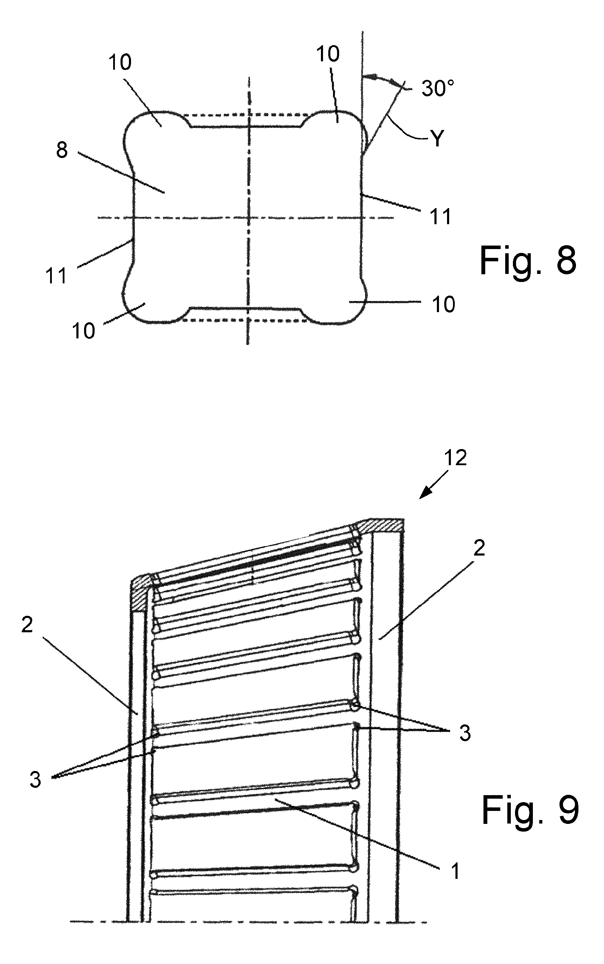

Die Figuren 3 und 4 sowie die Figuren 5 bis 7 und 9 bis 10 zeigen gemäß den Ansichten A-B und E-F der Fig. 2, dass die Querschnittsgeometrie der Käfigstege 1 an die Geometrie der Vertiefungen 3 der Käfigtaschen 12 angepasst ist. So haben die Käfigstege 1 im Querschnitt eine etwa trapezförmige Geometrie, mit einer radial inneren Seite 5, einer radial äußeren Seite 6 und mit zwei in Umfangsrichtung des Käfigs weisenden Seitenflächen 4. Die radial innere Seite 5 der Käfigstege 1 ist dabei kürzer als die radial äußere Seite 6, welches der Tatsache geschuldet ist, dass der Durchmesser der in den Käfigtaschen 8 radial nur teilweise aufgenommenen Wälzkörper 9 nach radial innen zunimmt.

Eine Besonderheit weisen die beiden Seitenflächen 4 dadurch auf, dass diese jeweils in zwei zueinander abgewinkelte Abschnitte 4.1 und 4.2 unterteilt sind. Hierbei ist gemäß dem dargestellten Ausführungsbeispiel vorgesehen, dass diese Abschnitte 4.1, 4.2 unter einem Winkel a von 120° bis 170° aneinander grenzen. Weiter ist in den Figuren erkennbar, dass die radial nach innen weisende Seite 5 eines jeden Käfigstegs 1 mit dem daran nach radial außen anschließenden Abschnitt 4.2 der in Umfangsrichtung weisenden Seiten 4 unter einem Winkel b von 100° bis 150° aneinander grenzen. Schließlich ist der dargestellte Käfigsteg 1 so ausgebildet, dass der radial innen angeordnete Abschnitt 4.2 der in Umfangsrichtung weisenden Seiten 4 des Käfigstegs 1 unter einem Winkel d von 20° bis 40° zu einer Geraden L ausgerichtet ist, die parallel zur Flächennormalen N der radial nach innen weisenden Seite 5 des Käfigstegs 1 ausgerichtet ist. Durch diese winkelbezogenen Geometrien weisen auch die Käfigstege 1 eine optimale mechanische Festigkeit bei vorgegebenen Abmessungen der Käfigtaschen 8 auf.

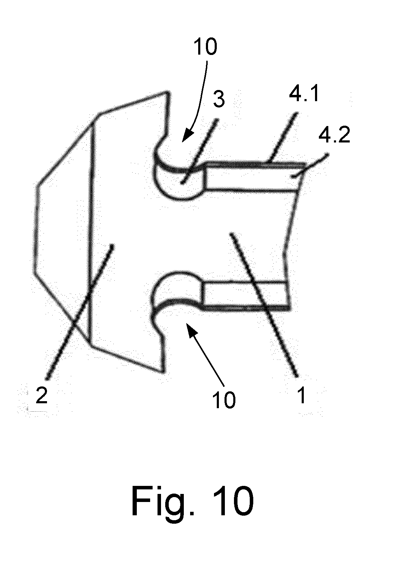

Schließlich sei mit Bezug auf Fig. 10 darauf hingewiesen, dass die Taschenecken 10 an ihren axialen Enden rund ausgefräst sind, wobei eine Tangente Y an den Rundungen der Taschenecken 10 zu den stirnseitigen Kanten 11 der Käfigtaschen 8 einen Winkel von 30° einnimmt.

### Bezugszeichenliste

- 1: Käfigsteg
- 2: Seitenring
- 3: Vertiefung in der Taschenecke
- 4: Seitenfläche
- 4.1: Radial äußerer Abschnitt der Seitenfläche 4
- 4.2: Radial innerer Abschnitt der Seitenfläche 4
- 5: Radial innere Seite der Käfigstege
- 6: Radial äußere Seite der Käfigstege
- 7: Radiale Mitte der Vertiefung 3
- 8: Käfigtasche
- 9: Kegelrolle
- 10: Taschenecke
- 11: Stirnseitige Kante der Taschenecke
- 12: Wälzlagerkäfig
- L: Gerade
- N: Flächennormale
- X: Blickrichtung
- Y: Tangente

## Patentansprüche

1. Wälzlagerkäfig (12) mit zwei Seitenringen (2) und einer Mehrzahl von Käfigstegen (1), wobei die Seitenringe (2) und die Käfigstege (1) eine Vielzahl von Käfigtaschen (8) bilden, wobei in den Ecken (10) der Käfigtaschen (8) jeweils eine Vertiefung (3) ausgebildet ist, **dadurch gekennzeichnet, dass** die Vertiefung (3) sich zu ihrer radialen Mitte (7) hin verjüngt, ohne dabei eine Anlauffläche für den zugeordneten Wälzkörper (9) zu bilden.

2. Wälzlagerkäfig nach Anspruch 1 oder 2, **dadurch gekennzeichnet, dass** Verjüngung der Vertiefung (3) der Taschenecken (10) sowohl in Umfangsrichtung als auch in axialer Richtung des Käfigs (12) ausgebildet ist.

3. Wälzlagerkäfig nach Anspruch 1, **dadurch gekennzeichnet, dass** in einer Draufsicht von radial außen nach radial innen die Taschenecken (10) annähernd elliptisch oder angenähert stadionartig ausgebitdet sind.

4. Wälzlagerkäfig nach Anspruch 1 bis 3, **dadurch gekennzeichnet, dass** dieser mit seinen Seitenringen (2) und Käfigstegen (1) als Massivkäfig aus einem Stück gefertigt ist.

5. Wälzlagerkäfig nach einem der vorherigen Ansprüche, **dadurch gekennzeichnet, dass** die radial nach außen weisende Seite (6) der Käfigstege (1) in Umfangsrichtung des Käfigs (12) breiter ausgebildet ist als deren radial nach innen weisende Seite (5).

6. Wälzlagerkäfig nach einem der vorherigen Ansprüche, **dadurch gekennzeichnet, dass** die in Umfangsrichtung weisenden Seiten (4) der Käfigstege (1) jeweils zwei zueinander abgewinkelte Abschnitte (4.1, 4.2) aufweisen.

7. Wälzlagerkäfig nach Anspruch 6, **dadurch gekennzeichnet, dass** die zueinander abgewinkelten Abschnitte (4.1, 4.2) der in Umfangsrichtung weisenden Seiten (4) der Käfigstege (1) unter einem Winkel a von 120° bis 170° aneinander grenzen.

8. Wälzlagerkäfig nach Anspruch 6 oder 7, **dadurch gekennzeichnet, dass** die radial nach innen weisende Seite (5) eines jeden Käfigstegs (1) mit dem daran nach radial außen anschließenden Abschnitt (4.2) der in Umfangsrichtung weisenden Seiten (4) unter einem Winkel b von 100° bis 150° aneinander grenzen.

9. Wälzlagerkäfig nach Anspruch 6 bis 8, **dadurch gekennzeichnet, dass** die radial nach außen weisende Seite (6) eines jeden Käfigstegs (1) mit dem daran nach radial innen anschließenden Abschnitt (4.1) der in Umfangsrichtung weisenden Seiten (4) unter einem Winkel c von 80° bis 90° aneinander grenzen.

10. Wälzlagerkäfig nach einem der Ansprüche 6 bis 9, **dadurch gekennzeichnet, dass** der radial innen angeordnete Abschnitt (4.2) der in Umfangsrichtung weisenden Seiten (4) eines jeden Käfigstegs (1) unter einem Winkel d = 20° bis 40° zu einer Geraden (L) ausgerichtet ist, die parallel zur Flächennormalen (N) der radial nach innen weisenden Seite (5) des Käfigstegs (1) ausgerichtet ist.

11. Verfahren zur Herstellung eines Wälzlagerkäfigs (12) nach einem der vorhergehenden Ansprüche, **dadurch gekennzeichnet, dass** eine Vielzahl von Käfigtaschen (8) in einen massiven Käfigrohling gefräst werden, wobei die Ecken (10) der Käfigtaschen (8) derart gefräst werden, dass in ihnen jeweils eine Vertiefung (3) ausgebildet ist, die sich zu ihrer radialen Mitte (7) hin verjüngt, ohne dabei eine Anlauffläche für den zugeordneten Wälzkörper (9) zu bilden.

12. Verfahren nach Anspruch 11, **dadurch gekennzeichnet, dass** die Vertiefung (3) der Taschenecken (10) so ausgefräst werden, dass die Verjüngung sowohl in Umfangsrichtung als auch in axialer Richtung des Käfigs (12) ausgebildet wird.

13. Verfahren nach Anspruch 11 oder 12, **dadurch gekennzeichnet, dass** die Taschenecken (10) so ausgefräst werden, dass diese in einer Draufsicht von radial außen nach radial innen annähernd elliptisch oder angenähert stadionartig ausgebildet sind.

14. Verfahren nach Anspruch 11, **dadurch gekennzeichnet, dass** das Fräsen mit einer mehrachsigen Fräsmaschine erfolgt.

## Claims

1. Anti-friction bearing cage (12) having two side rings (2) and a plurality of cage crosspieces (1), the side rings (2) and the cage crosspieces (1) forming a multiplicity of cage pockets (8), in each case one depression (3) being configured in the corners (10) of the cage pockets (8), **characterized in that** the depression (3) tapers towards its radial centre (7) without in the process forming a run-on face for the associated rolling body (9).

2. Anti-friction bearing cage according to Claim 1 or 2, **characterized in that** tapering of the depression (3) of the pocket corners (10) is configured both in the circumferential direction and in the axial direction of the cage (12).

3. Anti-friction bearing cage according to Claim 1, **characterized in that**, in a plan view from the radial outside to the radial inside, the pocket corners (10) are of approximately elliptical or approximately arena-like configuration.

4. Anti-friction bearing cage according to Claims 1 to 3, **characterized in that** it is manufactured with its side rings (2) and cage crosspieces (1) as a solid cage from one piece.

5. Anti-friction bearing cage according to one of the preceding claims, **characterized in that** the radially outwardly pointing side (6) of the cage crosspieces (1) is of wider configuration in the circumferential direction of the cage (12) than its radially inwardly pointing side (5).

6. Anti-friction bearing cage according to one of the preceding claims, **characterized in that** those sides (4) of the cage crosspieces (1) which point in the circumferential direction have in each case two sections (4.1, 4.2) which are angled away with respect to one another.

7. Anti-friction bearing cage according to Claim 6, **characterized in that** the sections (4.1, 4.2) which are angled away with respect to one another of those sides (4) of the cage crosspieces (1) which point in the circumferential direction adjoin one another at an angle a of from 120° to 170°.

8. Anti-friction bearing cage according to Claim 6 or 7, **characterized in that** the radially inwardly pointing side (5) of each cage crosspiece (1) adjoins that section (4.2) which adjoins it radially to the outside of the sides (4) which point in the circumferential direction at an angle b of from 100° to 150°.

9. Anti-friction bearing cage according to Claims 6 to 8, **characterized in that** the radially outwardly pointing side (6) of each cage crosspiece (1) adjoins that section (4.1) which adjoins it radially to the inside of the sides (4) which point in the circumferential direction at an angle c of from 80° to 90°.

10. Anti-friction bearing cage according to one of Claims 6 to 9, **characterized in that** the radially inwardly arranged section (4.2) of those sides (4) of each cage crosspiece (1) which point in the circumferential direction is oriented at an angle d = from 20° to 40° with respect to a straight line (L) which is oriented parallel to the surface perpendicular (N) of the radially inwardly pointing side (5) of the cage crosspiece (1).

11. Method for producing an anti-friction bearing cage (12) according to one of the preceding claims, **characterized in that** a multiplicity of cage pockets (8) are milled into a solid cage blank, the corners (10) of the cage pockets (8) being milled in such a way that a depression (3) is configured in each case in them, which depression (3) tapers towards its radial centre (7) without in the process forming a run-on face for the associated rolling body (9).

12. Method according to Claim 11, **characterized in that** the depressions (3) of the pocket corners (10) are milled out in such a way that the tapering is configured both in the circumferential direction and in the axial direction of the cage (12).

13. Method according to Claim 11 or 12, **characterized in that** the pocket corners (10) are milled out in such a way that, in a plan view from the radial outside to the radial inside, they are of approximately elliptical or approximately arena-like configuration.

14. Method according to Claim 11, **characterized in that** the milling is carried out by way of a multi-axis milling machine.

## Revendications

1. Cage de palier à roulement (12) comprenant deux bagues latérales (2) et une pluralité de nervures de cage (1), les bagues latérales (2) et les nervures de cage (1) formant une pluralité de poches de cage (8), un évidement (3) étant à chaque fois réalisé dans les coins (10) des poches de cage (8), **caractérisée en ce que** l'évidement (3) se rétrécit en direction de son centre radial (7), sans former en l'occurrence une surface de butée pour le corps de roulement (9) associé.

2. Cage de palier à roulement selon la revendication 1 ou 2, **caractérisée en ce que** le rétrécissement de l'évidement (3) des coins de poche (10) est réalisé non seulement dans la direction périphérique mais aussi dans la direction axiale de la cage (12).

3. Cage de palier à roulement selon la revendication 1, **caractérisée en ce que**, dans une vue de dessus de radialement à l'extérieur vers radialement à l'intérieur, les coins de poche (10) sont réalisés de manière approximativement elliptique ou approximativement en forme de stade.

4. Cage de palier à roulement selon les revendications 1 à 3, **caractérisée en ce que** celle-ci est fabriquée avec ses bagues latérales (2) et nervures de cage (1) en tant que cage pleine d'une seule pièce.

5. Cage de palier à roulement selon l'une quelconque des revendications précédentes, **caractérisée en ce que** le côté (6), tourné radialement vers l'extérieur, des nervures de cage (1) est réalisé de manière plus large dans la direction périphérique de la cage (12) que son côté (5) tourné radialement vers l'intérieur.

6. Cage de palier à roulement selon l'une quelconque des revendications précédentes, **caractérisée en ce que** les côtés (4), tournés dans la direction périphérique, des nervures de cage (1) comprennent à chaque fois deux portions (4.1, 4.2) coudées l'une par rapport à l'autre.

7. Cage de palier à roulement selon la revendication 6, **caractérisée en ce que** les portions (4.1, 4.2) coudées l'une par rapport à l'autre des côtés (4), tournés dans la direction périphérique, des nervures de cage (1) sont adjacentes l'une à l'autre suivant un angle a de 120° à 170°.

8. Cage de palier à roulement selon la revendication 6 ou 7, **caractérisée en ce que** le côté (5), tourné radialement vers l'intérieur, de chaque nervure de cage (1) est adjacent à la portion (4.2), s'y raccordant radialement vers l'extérieur, des côtés (4) tournés dans la direction périphérique, suivant un angle b de 100° à 150°.

9. Cage de palier à roulement selon les revendications 6 à 8, **caractérisée en ce que** le côté (6), tourné radialement vers l'extérieur, de chaque nervure de cage (1) est adjacent à la portion (4.1), s'y raccordant radialement vers l'intérieur, des côtés (4) tournés dans la direction périphérique suivant un angle c de 80° à 90°.

10. Cage de palier à roulement selon l'une quelconque des revendications 6 à 9, **caractérisée en ce que** la portion (4.2), disposée radialement à l'intérieur, des côtés (4), tournés dans la direction périphérique, de chaque nervure de cage (1) est orientée suivant un angle d = 20° à 40° par rapport à une droite (L) qui est orientée parallèlement à la normale à la surface (N) du côté (5), tourné radialement vers l'intérieur, de la nervure de cage (1).

11. Procédé de fabrication d'une cage de palier à roulement (12) selon l'une quelconque des revendications précédentes, **caractérisé en ce qu'**une pluralité de poches de cage (8) sont fraisées dans une ébauche de cage pleine, les coins (10) des poches de cage (8) étant fraisés de telle sorte qu'un évidement (3) soit à chaque fois réalisé dans ceux-ci, lequel évidement se rétrécit en direction de son centre radial (7), sans former en l'occurrence une surface de butée pour le corps de roulement (9) associé.

12. Procédé selon la revendication 11, **caractérisé en ce que** les évidements (3) des coins de poche (10) sont fraisés de telle sorte que le rétrécissement soit réalisé non seulement dans la direction périphérique mais aussi dans la direction axiale de la cage (12).

13. Procédé selon la revendication 11 ou 12, **caractérisé en ce que** les coins de poche (10) sont fraisés de telle sorte que, dans une vue de dessus de radialement à l'extérieur vers radialement à l'intérieur, ceux-ci soient réalisés de manière approximativement elliptique ou approximativement en forme de stade.

14. Procédé selon la revendication 11, **caractérisé en ce que** le fraisage s'effectue à l'aide d'une machine à fraiser multi-axes.
